# EUROPÄISCHE PATENTANMELDUNG

(11) **EP 2 424 084 A2**
(43) Veröffentlichungstag der Anmeldung: **29.02.2012**
(21) Anmeldenummer: 11161428.5
(22) Anmeldetag: 07.04.2011
(51) Int. Cl.: H02K 13/10, F02B 37/18

(54) **Stelleinrichtung für eine Ventilklappe, Abgasturbolader, Verfahren zum Betreiben**

(30) Priorität: 04.08.2010 DE 102010038889
(71) Anmelder: Robert Bosch GmbH, 70442 Stuttgart (DE)
(72) Erfinder: Baeuerle, Michael, 71735, Eberdingen (DE); Immendoerfer, Ingo, 71732, Tamm (DE)

(57) **Zusammenfassung**

Die Erfindung betrifft eine Stelleinrichtung (2) für eine Ventilklappe, insbesondere für eine Ventilklappe eines Waste-Gate-Ventils eines Abgasturboladers, mit einem elektrischen Stellmotor (1), der einen Rotor (5) und Kommutierungsmittel (9) aufweist, wobei der Rotor (5) mit einer die Ventilklappe betätigenden Stellwelle wirkverbunden ist, um durch Rotation in eine Schließdrehrichtung die Ventilklappe in ihre Schließposition zu drängen. Dabei ist vorgesehen, dass die Kommutierungsmittel (9) zur Nachkommutierung in Schließdrehrichtung zumindest bei niedrigen Drehzahlen (n) des Stellmotors (1) ausgebildet sind.

Ferner betrifft die Erfindung einen Abgasturbolader sowie ein Verfahren zum Betreiben einer Stelleinrichtung.

## Beschreibung

Die Erfindung betrifft eine Stelleinrichtung für eine Ventilklappe, insbesondere für eine Ventilklappe eines Waste-Gate-Ventils eines Abgasturboladers, mit einem elektrischen Stellmotor, der einen Rotor und Kommutierungsmittel aufweist, wobei der Rotor mit einer die Ventilklappe betätigenden Stellwelle wirkverbunden ist, um durch Rotation in eine Schließdrehrichtung die Ventilklappe in ihre Schließposition zu drängen.

Weiterhin betrifft die Erfindung einen Abgasturbolader, insbesondere einer Brennkraftmaschine eines Kraftfahrzeugs, mit einem Waste-Gate-Ventil und mit einer Stelleinrichtung zum Betätigen einer Ventilklappe des Waste-Gate-Ventils.

Ferner betrifft die Erfindung ein Verfahren zum Betreiben einer Stelleinrichtung für eine Ventilklappe, insbesondere wie sie oben beschrieben wurde, mit einem elektrischen Stellmotor, der einen Rotor und Kommutierungsmittel aufweist, wobei der Rotor mit einer die Ventilklappe betätigenden Stellwelle wirkverbunden ist, und zum Drängen der Ventilklappe in ihre Schließstellung in eine Schließdrehrichtung angetrieben wird.

### Stand der Technik

Stelleinrichtungen, Abgasturbolader sowie Verfahren zum Betreiben der Stelleinrichtungen sind aus dem Stand der Technik bekannt. Gegenüber bekannten pneumatischen Stelleinrichtungen ist es möglich, mittels einer elektrischen Stelleinrichtung, die einen elektrischen Stellmotor umfasst, erheblich größere Stellkräfte bereitzustellen, die zum Dichthalten der Ventilklappe in ihrer Schließposition erforderlich sind. Mittels einer hohen Übersetzung innerhalb der Stelleinrichtung sollen möglichst hohe Schließkräfte bereitgestellt werden, die den auftretenden dynamischen und stationären Gaskräften standhalten. Das dichte Schließen der Ventilklappe ist erforderlich, um im unteren Drehzahlbereich einer Brennkraftmaschine insbesondere bei Volllast über eine möglichst hohe Turbinenleistung einen möglichst hohen Ladedruck bereitzustellen. Zum optimierten Dichthalten des Waste-Gate-Ventils in der geschlossenen Position sind entsprechende Dauer-Kräfte erforderlich. Eine niedrigere Übersetzung erlaubt hingegen eine höhere Verstellgeschwindigkeit der Ventilklappe und damit eine höhere Dynamik des Waste-Gate-Ventils, steht jedoch im Zielkonflikt zu der gewünschten hohen Schließkraft.

Um diesen Konflikt zu lösen, ist es beispielsweise aus der Offenlegungsschrift DE 102 45 193 A1 bekannt, eine sich über den Verstellweg verändernde Übersetzung zwischen dem Stellmotor und der Stellwelle vorzusehen. Zum Realisieren der sich verändernden Übersetzung ist jedoch ein hoher konstruktiver Aufwand erforderlich. Darüber hinaus geht durch eine derartige Ausbildung Bauraum verloren.

### Offenbarung der Erfindung

Die erfindungsgemäße Stelleinrichtung hat dem gegenüber den Vorteil, dass bei gleichbleibendem Bauraumbedarf in Schließdrehrichtung ein hohes Drehmoment zur Verfügung steht, um den Gaskräften entgegenzuwirken und um ein dichtes Verschließen des Waste-Gate-Ventils zu gewährleisten, wobei dennoch eine hohe Dynamik, insbesondere in Öffnungsdrehrichtung geboten wird. Die erfindungsgemäße Stelleinrichtung zeichnet sich dadurch aus, dass die Kommutierungsmittel zur Nachkommutierung in Schließdrehrichtung zumindest bei niedrigen Drehzahlen des Stellmotors ausgebildet sind. Hierdurch wird der Kommutierungswinkel zu dem Drehwinkel des Rotors zumindest bei niedrigen Drehzahlen, insbesondere bei Drehzahlen unterhalb der Leerlaufdrehzahl des Stellmotors, verdreht ausgerichtet, sodass der Rotor dem Kommutierungszeitpunkt in Drehrichtung nachläuft. Hierdurch wird die Drehmoment-Drehzahl-Kennlinie des Stellmotors dahingehend beeinflusst, dass bei niedrigen Drehzahlen ein hohes Drehmoment zur Verfügung steht. Wird lediglich die Drehrichtung des so ausgebildeten Stellmotors geändert, findet eine Vorkommutierung statt, die zwar zu einem niedrigeren Drehmoment führt, das jedoch beim Öffnen des Ventils von geringerer Bedeutung ist.

Vorzugsweise umfassen die Kommutierungsmittel einen mechanischen Kommutator, der zur Nachkommutierung in Schließdrehrichtung verdreht zu dem Rotor ausgerichtet ist. Unter dem mechanischen Kommutator sind hierbei insbesondere mit Wicklungen des Rotors elektrisch verbundene, und auf einer Rotorwelle drehfest angeordnete Kommutatorlamellen zu verstehen, die mit im Gehäuse des Stellmotors angeordneten Kommutatorbürsten zusammenwirken. Bei der Fertigung von Stellmotoren mit Kommutator ist eine Ausrichtung des Kommutators zu dem Rotor ohnehin erforderlich. Bevorzugt erfolgt die Ausrichtung durch eine entsprechend verdrehte Anordnung der Kommutatorlamellen auf einer Rotorwelle oder besonders bevorzugt durch eine entsprechend verdrehte Anordnung der Kommutatorbürsten. Durch die vorteilhafte Ausrichtung zur Nachkommutierung ändert sich bei der Fertigung des Stellmotors lediglich der einzustellende Kommutierungswinkel. Insofern wird der Herstellungsaufwand der vorteilhaften Stelleinrichtung gering gehalten, wobei kein zusätzlicher Bauaufwand und keine zusätzlichen Kosten entstehen.

Besonders bevorzugt ist der Kommutator verdrehbar zu dem Rotor angeordnet/ausgebildet. Vorzugsweise sind hierzu in ihrer Position verstellbare Kommutatorbürsten vorgesehen. Die verdrehbare Anordnung des Kommutators erlaubt ein Verstellen des Kommutatorwinkels während des Betriebs des Stellmotors, sodass die Drehmoment-Drehzahl-Kennlinie des Stellmotors an aktuelle Randbedingungen und Anforderungen anpassbar ist. So wird der Kommutator in diesem Fall zum Schließen des Ventils zumindest bei niedrigen Drehzahlen vorzugsweise zur Nachkommutierung eingestellt, wobei die Nachkommutierung bevorzugt mit zunehmender Drehzahl verringert wird, um in einem Bereich höherer Drehzahlen besonders bevorzugt eine Vorkommutierung einzustellen, die eine Erhöhung des Drehmoments im Bereich höherer Drehzahlen bewirkt. So wird für den Schließvorgang ein höheres Drehmoment zur Verfügung gestellt und gleichzeitig eine hohe Dynamik mit kurzen Stellzeiten ermöglicht.

Gemäß einer alternativen Ausführungsform ist bevorzugt vorgesehen, dass die Kommutierungsmittel eine elektronische Kommutiereinrichtung umfassen, die zumindest bei niedrigen Drehzahlen, insbesondere bei Drehzahlen unterhalb der Leerlaufdrehzahl, zur Nachkommutierung in Schließdrehrichtung eingestellt ist. Die elektronische Kommutierungseinrichtung umfasst vorzugsweise Halbleiterschalter zum elektronischen Kommutieren des Stellmotors. Elektronische Kommutierungseinrichtungen sind prinzipiell bekannt, sodass hier nicht detailliert darauf eingegangen werden soll. Durch die Einstellung zur Nachkommutierung in Schließdrehrichtung werden die oben bereits beschriebenen Vorteile bezüglich des Drehmoments erzielt.

Vorzugsweise ist die Kommutierungseinrichtung im Bereich hoher Drehzahlen zur Vorkommutierung eingestellt. Dadurch kann eine hohe Dynamik, wie oben bereits gesagt, erreicht werden. Mittels der elektronischen Kommutierungseinrichtung ist dies auf einfache Art und Weise möglich und im Betrieb einstellbar.

Bevorzugt weist die elektronische Kommutierungseinrichtung mindestens einen Sensor zum Erfassen der Drehwinkelposition des Rotors auf. Besonders bevorzugt handelt es sich bei dem Sensor um einen Hall-Sensor, mittels dessen die Drehwinkelposition des Rotors auf einfache und kostengünstige Art und Weise erfassbar ist.

Der erfindungsgemäße Abgasturbolader zeichnet sich durch die Ausbildung der Stelleinrichtung wie sie oben beschrieben wurde aus. Hierdurch wird ein Abgasturbolader geboten, der in niedrigen Drehzahlbereichen einen hohen Wirkungsgrad aufweist, indem er ein dichtes Verschließen des Waste-Gate-Ventils gewährleistet. Darüber hinaus wird eine hohe Dynamik des Waste-Gate-Ventils ermöglicht.

Das erfindungsgemäße Verfahren zum Betreiben der Stelleinrichtung zeichnet sich dadurch aus, dass der Stellmotor in Schließdrehrichtung zumindest im Bereich niedriger Drehzahlen, insbesondere unterhalb der Leerlaufdrehzahl, nachkommutiert wird. Hierdurch ergeben sich die oben bereits beschriebenen Vorteile.

Vorzugsweise wird der Stellmotor im Bereich höherer Drehzahlen vorkommutiert. Besonders bevorzugt wird die Nachkommutierung mit zunehmender Drehzahl reduziert und vorzugsweise bei Erreichen hoher Drehzahlen in eine Vorkommutierung überführt.

Im Folgenden soll die Erfindung anhand der Zeichnung näher erläutert werden. Dazu zeigen
- Figur 1: einen Stellantrieb in einer vereinfachten Darstellung und
- Figuren 2A und 2B: Drehmoment-Drehzahl-Kennlinien des Stellantriebs.

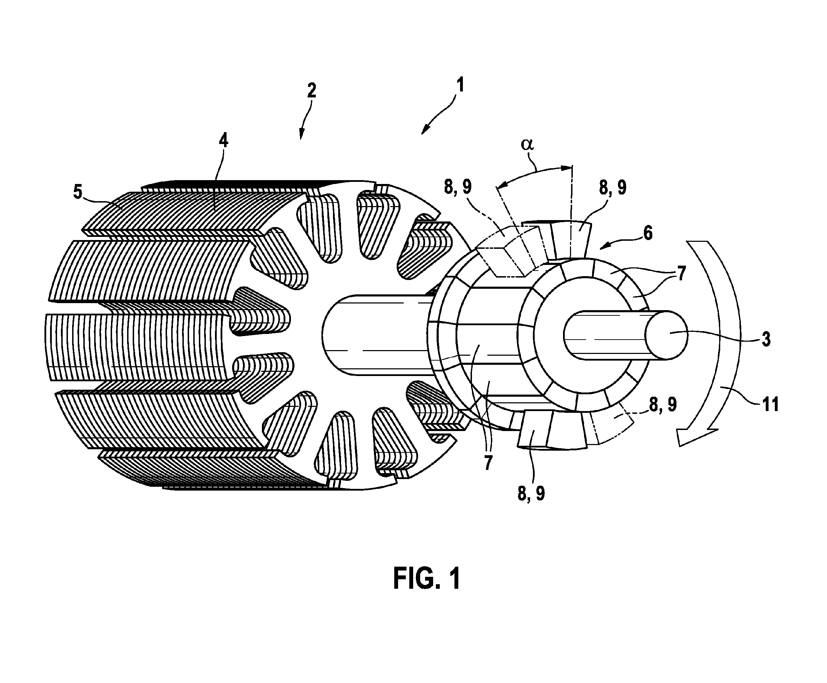

Figur 1 zeigt in einer perspektivischen Darstellung einen Teil eines Stellmotors 1 eines hier nicht näher dargestellten Stellantriebs 2 für ein Waste-Gate-Ventil eines Abgasturboladers einer Brennkraftmaschine. Der Stellmotor 1 umfasst eine, in einem hier nicht dargestellten Gehäuse drehbar gelagerte Rotorwelle 3, auf der drehfest ein Blechlamellenpaket 4 eines Rotors 5 sowie ein mechanischer Kommutator 6 angeordnet sind. Der Rotor 5 ist wie üblich mit einer hier nicht dargestellten Rotorwicklung versehen und in dem Gehäuse des Stellmotors 1 von mehreren Permanentmagneten (Pole) umgeben. Der Kommutator 6 weist mehrere auf der Rotorwelle 3 angeordnete und sich axial erstreckende Kommutatorlamellen 7 auf, von denen hier nur einige mit Bezugszeichen versehen sind. Die Kommutatorlamellen sind elektrisch mit der Wicklung des Rotors 5 wirkverbunden. Der Kommutator 6 umfasst weiterhin in dem Gehäuse des Stellmotors 1 angeordnete Kommutatorbürsten 8, die zusammen mit den Kommutatorlamellen Kommutierungsmittel 9 des Stellmotors 1 bilden. Die Rotorwelle 3 ist üblicherweise mit einem Getriebe, insbesondere mit einem Viergelenkgetriebe verbunden, das mit einer Ventilklappe des Waste-Gate-Ventils zusammenwirkt. So kann durch eine Rotationsbewegung der Rotorwelle 3 ein Drehmoment über das Getriebe beziehungsweise Viergelenkgetriebe auf die Ventilklappe ausgeübt werden, um diese in ihre Schließposition oder in eine Öffnungsposition zu verlagern. Um einen dichten Sitz der Ventilklappe in ihrer Schließstellung zu gewährleisten, und damit insbesondere bei niedrigen Drehzahlen (der Brennkraftmaschine) ein hoher Wirkungsgrad des Abgasturboladers erreichbar ist, ist zum Schließen der Ventilklappe ein hohes Drehmoment erforderlich. Zum Öffnen der Ventilklappe reicht hingegen ein niedriges Drehmoment aus.

Bei der Montage beziehungsweise Herstellung des Stellmotors 1 wird der Kommutator 6 zu dem Rotor 5 üblicherweise in einem bestimmten, neutralen

Drehwinkel ausgerichtet, um eine sogenannte symmetrische Drehmoment-Drehzahl-Kennlinie zu erhalten.

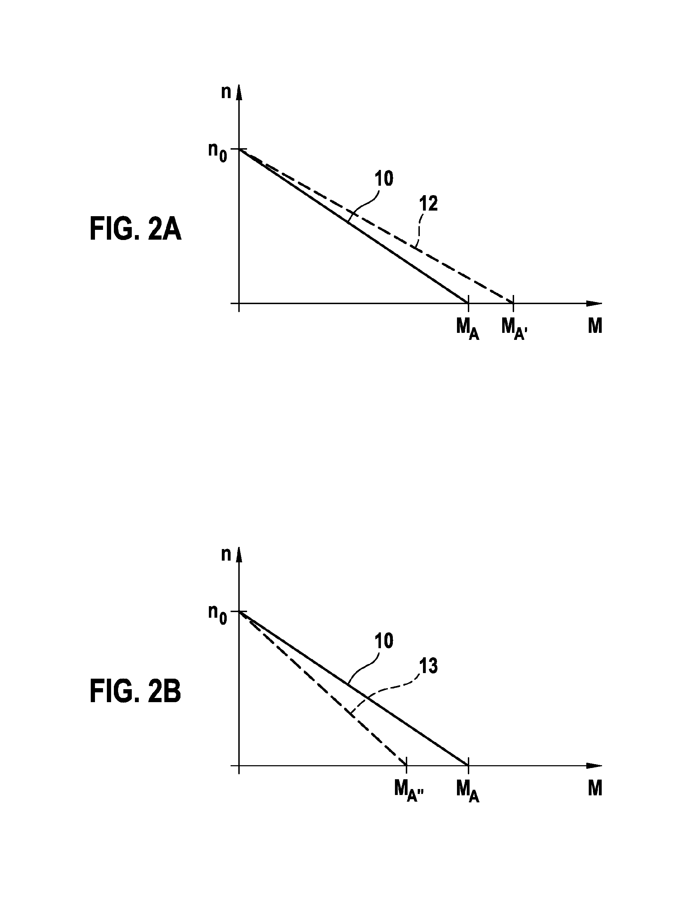

Figur 2A zeigt hierzu in einem Diagramm die Drehzahl n über das Drehmoment M des Stellmotors 1 aufgetragen. Ausgehend von der Leerlaufdrehzahl n₀ des Stellmotors 1 ist das Drehmoment M mit abnehmender Drehzahl durch eine durchgezogene Linie 10 dargestellt. Beim Stillstand des Rotors 5 erreicht der Stellmotor sein Anzugsdrehmoment M_{A}. Während Figur 2A den Drehmomentverlauf des Stellmotors 1 für den Fall darstellt, dass sich der Rotor 5 in eine Richtung dreht, die zum Schließen der Ventilklappe dient, also in Schließdrehrichtung rotiert - wie durch einen Pfeil 11 in Figur 1 angedeutet -, zeigt Figur 2B den Verlauf des Drehmoments M über die Drehzahl n für den Fall, dass der Rotor 5 in die entgegengesetzte Richtung, also in Öffnungsdrehrichtung rotiert. In beiden Fällen verläuft die Drehmoment-Drehzahl-Kennlinie gleich, sodass ein symmetrisches Verhalten des Stellmotors 1 vorliegt.

Die Kommutierungsmittel 9 des Stellmotors 1 sind jedoch vorteilhafterweise zum Nachkommutieren ausgebildet, wozu der Kommutator 6 in einem bestimmten Winkel in Schließdrehrichtung verdreht zu dem Rotor 5 beziehungsweise zu dem Blechlamellenpaket 4 auf der Rotorwelle 3 angeordnet ist. In diesem Fall sind die Kommutatorbürsten 8 in Schließdrehrichtung des Rotors 5 um einen Winkel α versetzt zu dem Rotor 5 beziehungsweise zu ihrer neutralen Stellung - gestrichelt dargestellt - angeordnet, sodass eine Nachkommutierung erfolgt. Hierdurch ergibt sich das in Figur 2A durch eine gestrichelte Linie 12 dargestellte Verhalten des Stellmotors 1, wenn der Stellmotor 1 in Schließdrehrichtung betrieben wird. Im Unterschied zu der herkömmlichen, symmetrischen Ausbildung des Stellmotors 1 werden im Bereich niedriger Drehzahlen, also insbesondere im Bereich von Drehzahlen unterhalb der Leerlaufdrehzahl n₀, höhere Drehmomente und insbesondere ein höheres Anzugsdrehmoment M_{A}, erreicht. Durch das höhere Anzugsdrehmoment M_{A'}wird ein sicheres Verschließen der Ventilklappe gewährleistet, ohne dass beispielsweise ein Getriebe mit einer sich über den Verstellweg verändernden Übersetzung dem Stellmotor nachgeschaltet werden muss. Dadurch ist es mit einfachen Mitteln möglich, ein zum Schließen aufbringbares Drehmoment bei gleichbleibendem Bauraumbedarf und ohne erhöhten Kostenfaktor zu erhalten.

Wie in Figur 2B dargestellt, führt die Nachkommutierung in Schließdrehrichtung zwar dazu, dass in Öffnungsdrehrichtung niedrigere Drehmomente und ein insbesondere niedrigeres Anzugsdrehmoment M_{A"}, wie durch eine gestrichelte Linie 13 angedeutet, zur Verfügung stehen. Dies ist jedoch vernachlässigbar, da für das Öffnen der Ventilklappe keine hohen Drehmomente erforderlich sind.

Ein weiterer Vorteil des Stellmotors 1 liegt darin, dass die erhöhte Zuhaltekraft in Abhängigkeit von der Auslegung des Motors nur wenig von der Stellzeit für einen vollständigen Hub, also für eine vollständige Öffnung der Ventilklappe abhängig ist, im Gegensatz zu Lösungen mit einer sich verändernden Getriebeübersetzung. Besonders bevorzugt ist der Kommutator 6 verstellbar ausgebildet, sodass ein Verdrehen der Winkelstellung der Kommutatorbürsten 8 um den Winkel a auch während des Betriebs des Stellmotors 1 erfolgen kann. Dadurch kann erreicht werden, dass lediglich im Schließbetrieb beziehungsweise im Blockierbereich bei niedrigen Drehzahlen unterhalb der Leerlaufdrehzahl n₀ die Nachkommutierung eingestellt wird, um das Anzugsdrehmoment zu steigern. Bevorzugt wird die Nachkommutierung mit zunehmender Drehzahl n verringert, um im Bereich der Leerlaufdrehzahl n₀ eine Vorkommutierung einzustellen, die eine Drehmomenterhöhung im Bereich der oberen Drehzahlen bewirkt. Zum Einstellen der Vorkommutierung werden die Kommutatorbürsten 8 zweckmäßigerweise entgegen der Drehrichtung des Rotors 5 um einen bestimmten Winkel verstellt. Durch dieses Vorgehen kann eine Stellzeitverringerung im Betrieb des Stellmotors 1 erreicht werden. Vorzugsweise wird im Öffnungsbetrieb die symmetrische Drehmoment-Drehzahl-Kennlinie eingestellt, da hier ein hohes Drehmoment auch bei niedrigen Drehzahlen nicht von Bedeutung ist.

Durch das Verdrehen des Kommutators 6 in Schließdrehrichtung aus der neutralen Lage heraus wird eine Rotordurchflutungskomponente erzeugt, die in Richtung der Permanentmagnetdurchflutung zeigt. Damit erhöht sich der stromabhängige Hauptfluss gemäß M = k x 0 x 1, wobei M=Motormoment, k=Motorkonstante, θ=magnetischer Hauptfluss und 1=Ankerstrom bedeuten. Dadurch tritt in Nähe des Stillstandpunktes eine Drehmomenterhöhung gegenüber des nicht verdrehten Kommutators auf. Im Falle der Drehrichtungsumkehr wirkt diese Kommutatorverdrehung feldschwächend, weil sich nun die Stromrichtung bei unverändertem Permanentfluss umgekehrt hat. Damit wird bei entsprechender Bestromung ein geringeres Drehmoment erzeugt, wie in Figuren 2A und 2B dargestellt.

Alternativ zu der hier dargestellten Ausführungsform mit einem mechanischen Kommutator kann eine elektronische Kommutiereinrichtung vorgesehen sein, die mittels Halbleiterelementen die Kommutierung des Stellmotors 1 realisiert. Durch die elektronische Kommutierungseinrichtung ist es auf einfache Art und Weise möglich, die Nachkommutierung nur für niedrige Drehzahlen im Betrieb in Schließdrehrichtung einzustellen, um das Anzugsdrehmoment und damit die auf die Ventilklappe wirkende Schließkraft zu steigern. Zum Erfassen der Drehwinkelposition des Rotors 5 weist die elektronische Kommutiereinrichtung vorteilhafterweise einen Hall-Sensor auf. Bevorzugt wird hier die Nachkommutierung mit zunehmender Motordrehzahl verringert, um im Bereich der Leerlaufdrehzahl n₀ eine Vorkommutierung einzustellen, die eine Drehmomenterhöhung im Bereich der oberen Drehzahlen bewirkt, um eine Stellzeitverringerung zu erreichen. Durch die elektronische Kommutierungseinrichtung kann bei einem Betrieb in Öffnungsdrehrichtung leicht auf eine Nachkommutierung verzichtet, beziehungsweise eine symmetrische Drehmoment-Drehzahl-Kennlinie eingestellt werden.

## Patentansprüche

1. Stelleinrichtung (2) für eine Ventilklappe, insbesondere für eine Ventilklappe eines Waste-Gate-Ventils eines Abgasturboladers, mit einem elektrischen Stellmotor (1), der einen Rotor (5) und Kommutierungsmittel (9) umfasst, wobei der Rotor (5) mit einer die Ventilklappe betätigenden Stellwelle wirkverbunden ist, um durch Rotation in eine Schließdrehrichtung die Ventilklappe in ihre Schließposition zu drängen, **dadurch gekennzeichnet, dass** die Kommutierungsmittel (9) zur Nachkommutierung in Schließdrehrichtung zumindest bei niedrigen Drehzahlen (n) des Stellmotors (1) ausgebildet sind.

2. Stelleinrichtung nach Anspruch 1, **dadurch gekennzeichnet, dass** die Kommutierungsmittel (9) einen mechanischen Kommutator (6) umfassen, der zur Nachkommutierung in Schließdrehrichtung verdreht zu dem Rotor (5) ausgerichtet/angeordnet ist.

3. Stelleinrichtung nach einem der vorhergehenden Ansprüche, **dadurch gekennzeichnet, dass** der Kommutator (6) verdrehbar zu dem Rotor (5) angeordnet/ausgebildet ist.

4. Stelleinrichtung nach einem der vorhergehenden Ansprüche, **dadurch gekennzeichnet, dass** die Kommutierungsmittel (9) eine elektronische Kommutiereinrichtung umfassen, die zumindest bei niedrigen Drehzahlen (n) des Stellmotors (1) zur Nachkommutierung in Schließdrehrichtung eingestellt ist.

5. Stelleinrichtung nach einem der vorhergehenden Ansprüche, **dadurch gekennzeichnet, dass** die Kommutierungseinrichtung in Bereichen hoher Drehzahlen des Stellmotors (1) zur Vorkommutierung eingestellt ist.

6. Abgasturbolader, insbesondere einer Brennkraftmaschine eines Kraftfahrzeugs, mit einem Waste-Gate-Ventil und mit einer Stelleinrichtung zum Betätigen einer Ventilklappe des Waste-Gate-Ventils, **gekennzeichnet durch** die Ausbildung der Stelleinrichtung (2) nach einem oder mehreren der vorhergehenden Ansprüche.

7. Verfahren zum Betreiben einer Stelleinrichtung (2), insbesondere nach einem oder mehreren der vorhergehenden Ansprüche, für eine Ventilklappe eines Waste-Gate-Ventils eines Abgasturboladers, mit einem elektrischen Stellmotor (1), der einen Rotor (5) und Kommutierungsmittel (9) aufweist, wobei der Rotor (5) mit einer die Ventilklappe betätigenden Stellwelle wirkverbunden ist, und zum Drängen der Ventilklappe in ihre Schließstellung in einer Schließdrehrichtung angetrieben wird, **dadurch gekennzeichnet, dass** der Stellmotor (1) zumindest im Bereich niedriger Drehzahlen (n) des Stellmotors (1) in Schließdrehrichtung nachkommutiert wird.

8. Verfahren nach Anspruch 7, **dadurch gekennzeichnet, dass** der Stellmotor (1) in Bereichen hoher Drehzahlen (n) vorkommutiert wird.

9. Verfahren nach einem der Ansprüche 7 oder 8, **dadurch gekennzeichnet, dass** die Nachkommutierung mit zunehmender Drehzahl (n) des Stellmotors (1) erhöht wird.
